# EUROPEAN PATENT APPLICATION

(11) **EP 1 942 691 A1**
(43) Date of publication of application: **09.07.2008**
(21) Application number: 06830882.4
(22) Date of filing: 18.10.2006
(51) Int. Cl.: H04Q 7/38

(54) **SYSTEM AND METHOD FOR ASSISTING A MOBILE TERMINAL IN RESELECTING OR TRANSFERRING CELLS BETWEEN DIFFERENT TECHNOLOGIES**

(30) Priority: 25.10.2005 ES 200502598
(71) Applicant: Vodafone Group PLC, Newbury Berkshire RG14 2FN (GB); Vodafone Espana, S.A., 28108 Alcobendas, Madrid (ES)
(72) Inventor: ALMODOVAR HERRAIZ, Daniel, E-28029 Madrid (ES); CABALLERO HERRERO, José Eugenio, E-28044 Madrid (ES); RUBIO ANDRES, Francisco Javier, E-28031 Madrid (ES)
(74) Representative: Carvajal y Urquijo, Isabel
(86) International application number: PCT/ES2006/000575
(87) International publication number: WO 2007/048861

(57) **Abstract**

The invention relates to a system and to a method for assisting a mobile terminal (2) in reselecting or transferring cells between different technologies.

The inventive system comprises:
- scanner means (1) for scanning the radio spectrum available for radio communications in a predetermined area in which said mobile terminal is located,
- means for generating a measurement report containing information of the different technologies and resources associated with said area, and
- means for sending the report through a predetermined radio resource.

## Description

### Field of the Invention

The present invention is comprised within the field of mobile telecommunications, and more specifically in the ability of knowing the radio environment in which a mobile terminal is located and the decision making regarding this knowledge.

### Background of the Invention

In current processes for providing the reselection or transfer of cells between different technologies (e.g. between GSM and UMTS or vice versa by means of compressed mode according to the 3GPP regulation), the terminal carries out certain measurements in the entire spectrum available in the specific area in which it is located.

It is being seen in the first GSM-UMTS implementations that this search for frequencies with different technologies implies a more than noticeable degradation of the duration of current batteries and often of the time necessary to carry out said processes, time in which it is without transmitting due to the frequency sweep. Due to these lost times, a drop in the data speed performances and a lag are being detected in the tests which are currently being carried out between GSM and WCDMA.

Proposals are emerging on how to prevent this frequency sweep, some of which are based on position and databases, even on communication between the different systems. The present invention takes an innovating approach to this subject.

The industry sees the proposals on cognitive radios having intelligence for detecting which frequency and technology to use according to the environment with increasingly greater interest. Cognitive radios are a relatively recent concept in the world of R&D (mentioned for the first time by Joseph Mitola, "Cognitive Radio and Integrated Agent Architecture for Software Defined Radio Dissertation", Royal Institute of Technology, May 8, 2000), and are based on the fact that the communications device of the user is able to know the radio environment in which it is located and to make decisions with this knowledge (what it can transmit and what is the optimal spectrum to use so as to not cause interferences).

Patent application PCT WO 02/091783 thus describes a system and method for redirecting communication between mobile telephony networks with different radio access technologies based on measurements carried out by the actual mobile terminal, not by an independent system.

Patent application PCT WO 2005/039230 likewise describes a method for reselecting cells by means of scanning and parallel decoding of the frequency spectrum; said scanning is carried out by the actual mobile terminal.

It is known that abbreviations and acronyms are frequently used in the mobile telephony field. A glossary of acronyms/terms which are used throughout the present specification is provided below:
3GPP 3^{rd} Generation Partnership Project
GSM Global System for Mobile Communications
UMTS Universal Mobile Telecommunications System

### Description of the Invention

The invention relates to a system and to a method for assisting a mobile terminal in reselecting or transferring cells between different technologies according to claims 1 and 8, respectively. Preferred embodiments of the system and of the method are defined in the dependent claims.

According to the invention, a system and a method are provided which assist the user terminal in the measurements necessary for reselecting and transferring between cells of a cellular mobile communications system; said system provides a report with the main radio parameters of the different technologies available in the coverage area, as well as their degree of occupation (cell congestion).

The decision regarding the most suitable option for reselecting or transferring a cell will be made in the mobile terminal of the user or in the network, depending on the specification of the telecommunications system. However, by means of the present invention, the information necessary in order to be able to make this decision can be compiled outside the mobile terminal and outside the network, as the system of the invention can be a system autonomous to the network.

A first aspect of the invention relates to a system for assisting a mobile terminal in reselecting or transferring cells between different technologies comprising:
- scanner means for scanning the radio spectrum available for radio communications in a predetermined area in which said mobile terminal is located,
- means for generating a measurement report containing information of the different technologies and resources associated with said area,
- means for sending said report through a predetermined radio resource.

Said report preferably includes information on which resources are available and which are occupied.

Said predetermined radio resource through which the sending is carried out is preferably one of the systems with greatest possible range.

According to a preferred embodiment, the mobile terminal includes means for receiving said report and decision means configured to decide which resource to use for reselecting or transferring a cell based on said report with the available technologies and resources.

Or the mobile terminal can also include:
- means for receiving said report and scanner means for scanning the radio spectrum available for radio communications in its coverage area, and
- decision means configured to decide which resource to use for reselecting or transferring a cell based on said report with the available technologies and resources and on the information provided by the sweep which the mobile terminal has carried out.

The mobile terminal can include means for receiving more than one report.

The system of the invention can further include means for decoding the signals detected by the scanner means.

A second aspect of the invention relates to a method for assisting a mobile terminal in reselecting or transferring cells between different technologies which comprises:
- carrying out a sweep or scan of the radio spectrum available for radio communications in a predetermined area in which said mobile terminal is located,
- generating a measurement report containing information of the different technologies and resources associated with said area,
- sending said report through a predetermined radio resource to at least said mobile terminal.

Said report preferably includes information on which resources are available and which are occupied.

Said predetermined radio resource through which the sending is carried out is preferably that having the greatest range of all those available.

According to a preferred embodiment of the method of the invention, the mobile terminal decides which resource to use for reselecting or transferring a cell based on said report with the available technologies and resources.

According to another preferred embodiment of the method of the invention:
- the mobile terminal carries out a sweep or scan of the radio spectrum available for radio communications in its coverage area, and
- decides which resource to use for reselecting or transferring a cell based on said report with the available technologies and resources and on the information provided by the sweep which the mobile terminal has carried out.

It can further receive information on certain resources which have not been measured during said sweep or scan of the available radio spectrum.

In addition to the sweep or scan of the radio spectrum, the signals measured within said radio spectrum are decoded.

The mobile terminal can also carry out a scan of the area and provide feedback to the general scanner supplying it with information on the radio signals it receives.

The system explained in this description could thus have the following features:
- The system is specialized in scanning the different technologies and spectrum with its different particular channelings.
- The system can optionally scan and decode the signaling information which the radio access systems continuously transmit; it can thus take into account which resources, despite not being measured, could damage the system if they are used.
- The system can be programmed or informed in order to provide or restrict certain resources which have not been measured by the system itself (e.g. give radio parameters of the available "hotspots" in the area which cannot be measured by the scanning means, but does have a record of their position and radio parameters in its database).
- The system can be integrated in one of the radio systems available in the area (GSM, UMTS,....) or included as an isolated system assisting them. For example, functional nodes responsible for it can be added, SMU (Scanning Measurements Units) conceptually similar to the LMUs existing in the 3GPP architecture for location technologies.

### Brief Description of the Drawings

A drawing will be very briefly described below which aids to better understand the invention and which is specifically related to an embodiment of said invention, presented as an illustrative and non-limiting example thereof.

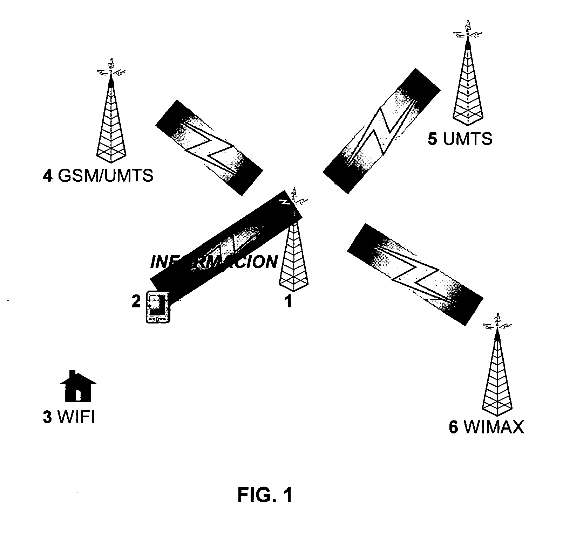

Figure 1 shows a diagram of a possible embodiment of the system of the invention with the different nodes associated thereto

### Description of a Preferred Embodiment of the Invention

Figure 1 shows a diagram of the system with the different associated nodes: the scanner 1, the mobile terminal 2, non-detected radio systems such as WIFI hotspots 3, and wide-area coverage systems such as GSM 4, UMTS 5, WIMAX 6, etc.

As shown in Figure 1, the system includes scanners 1 which sweep the radio spectrum available for radio communications within range. The scanner thus carries out a sweep of its resources for each technology, the frequencies can be seen with the standard 200 KHz channeling in GSM and thus has measurements of each channel both in GSM900 and GSM1800, whereas a scan with 5 MHz channeling is carried out in UMTS and it verifies which codes are being used in the area; the same is carried out for Wimax. After each sweep or scan a report is generated (measurement report). This report on the different available and occupied associated resources and technologies is sent through one of the radio systems available in the area; that which has the greatest range of all those available is preferably chosen, and using coding and resources that are fixed and known by the other systems (for example UMTS or GSM signaling information could be used).

How to send this information would have to be decided on by the 3GPP standard, for example it could be decided that GSM uses its channel 125 for sending this report and all terminals track this frequency before making a decision as to which resources to request from the communications network or this information is sent through both GSM resources (channel 125) and UMTS resources (by means of a code reserved for such use).

The mobile terminal 2 uses all these reports received from one or more scanners 1 in order to choose the best option without the drawback of loosing functionality, battery life and typical lags of the sweep process.

The degree of assistance of the network will depend on the implementation carried out which can vary from "completely assisted", in which the mobile equipment 2 does not carry out any frequency sweep, to "partially assisted", in which the measurement reports sent to the mobile are complemented by the measurements carried out by the mobile itself. Current systems are "non-assisted" since the mobile terminal does not have any external aid such as that explained in this invention.

Some parameters provided by the system of the invention are the following (non-comprehensive list):
1. Information of its own position or the position of the "hotspots" (WGS84 coordinates for example).
2. Measured radio access technology (GSM, UMTS, Wimax for example).
3. Source output power (for example 43dBm, 40dBm, etc.)
4. Signal level received in the scanner.
5. Received perceived quality.
6. Main signaling parameters of the technology being measured (GSM SYSTEM INFORMATION messages for example).

## Claims

1. A system for assisting a mobile terminal (2) in reselecting or transferring cells between different technologies comprising:
- scanner means (1) for scanning the radio spectrum available for radio communications in a predetermined area in which said mobile terminal is located,
- means for generating a measurement report containing information of the different technologies and resources associated with said area,
- means for sending said report through a predetermined radio resource.

2. A system according to claim 1, **characterized in that** said report includes information on which resources are available and which are occupied.

3. A system according to any of the previous claims, **characterized in that** said predetermined radio resource through which the sending is carried out is one of the systems with greatest possible range.

4. A system according to any of the previous claims, **characterized in that** the mobile terminal includes means for receiving said report and decision means configured to decide which resource to use for reselecting or transferring a cell based on said report with the available technologies and resources.

5. A system according to any of claims 1-4, **characterized in that** the mobile terminal includes:
- means for receiving said report and scanner means for scanning the radio spectrum available for radio communications in its coverage area,
- decision means configured to decide which resource to use for reselecting or transferring a cell based on said report with the available technologies and resources and on the information provided by the sweep which the mobile terminal has carried out.

6. A system according to any of the previous claims, **characterized in that** the mobile terminal includes means for receiving more than one report.

7. A system according to any of the previous claims, **characterized in that** it includes means for decoding the signals detected by the scanner means.

8. A method for assisting a mobile terminal in reselecting or transferring cells between different technologies which comprises:
- carrying out a sweep or scan of the radio spectrum available for radio communications in a predetermined area in which said mobile terminal is located,
- generating a measurement report containing information of the different technologies and resources associated with said area,
- sending said report through a predetermined radio resource to at least said mobile terminal.

9. A method according to claim 8, **characterized in that** said report includes information on which resources are available and which are occupied.

10. A method according to any of claims 8-9, **characterized in that** said predetermined radio resource through which the sending is carried out is that having the greatest range of all those available.

11. A method according to any of claims 8-10, **characterized in that** the mobile terminal decides which resource to use for reselecting or transferring a cell based on said report with the available technologies and resources.

12. A method according to any of claims 8-10, **characterized in that:**
- the mobile terminal carries out a sweep or scan of the radio spectrum available for radio communications in its coverage area, and
- decides which resource to use for reselecting or transferring a cell based on said report with the available technologies and resources and on the information provided by the sweep which the mobile terminal has carried out.

13. A method according to any of claims 8-12, **characterized in that** it further receives information on certain resources which have not been measured during said sweep or scan of the available radio spectrum.

14. A method according to any of claims 8-13, **characterized in that** in addition to the sweep or scan of the radio spectrum it decodes the signals measured within said radio spectrum.

15. A method according to any of claims 8-14, **characterized in that** the mobile terminal also carries out a scan of the area and provides feedback to the general scanner supplying it with information of the radio signals which it receives.
